# EUROPEAN PATENT APPLICATION

(11) **EP 4 593 097 A1**
(43) Date of publication of application: **30.07.2025**
(21) Application number: 24221330.4
(22) Date of filing: 19.12.2024
(51) Int. Cl.: H01M 4/04, H01M 4/02

(54) **METHOD AND APPARATUS FOR PRODUCING ACTIVE MATERIAL PARTICLE FOR DRY ELECTRODE**

(30) Priority: 26.01.2024 KR 20240012719
(71) Applicant: SAMSUNG SDI CO., LTD., Yongin-si, Gyeonggi-do 17084 (KR)
(72) Inventor: Yoo, Chijong, 17084 Yongin-Si Gyeonggi-do (KR); Lee, Jinhyon, 17084 Yongin-si, Gyeonggi-do (KR); Kwon, Seunguk, 17084 Yongin-si, Gyeonggi-do (KR); Kwon, Ilkyong, 17084 Yongin-si, Gyeonggi-do (KR); Bang, Seunggwon, 17084 Yongin-si, Gyeonggi-do (KR)
(74) Representative: Gulde & Partner

(57) **Abstract**

A method for producing active material particles for a dry electrode, includes: forming a film by rolling first active material particles; forming a film powder by crushing the formed film; and obtaining second active material particles by sifting at least a portion of the film powder. An average particle diameter of the second active material particles is greater than an average particle diameter of the first active material particles.

## Description

### BACKGROUND

### 1. Field

Aspects of embodiments of the present disclosure relate to a method and an apparatus for producing an active material particle for a dry electrode.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The positive and negative electrodes included in the electrode assembly may be manufactured based on the kind of electrode. Electrodes can be divided into wet electrodes that are manufactured using solvents, and dry electrodes that are manufactured without the use of solvents.

The above information disclosed in this Background section is for enhancement of understanding of the background of the present disclosure, and therefore, it may contain information that does not constitute related (or prior) art.

### SUMMARY

A dry electrode may be manufactured by forming a free-standing film that is produced in a film form and contains active materials, binders, and conductive materials. However, in the process of forming the free-standing film, the electrode film may lack flexibility, which may lead to film breakage or the failure to wind the film onto a roll. In cases where the electrode cannot maintain its film form, it may be difficult to proceed with subsequent processes. Therefore, flexibility of the electrode film may be desired.

The invention is defined by the appended claims. The description that follows is subjected to this limitation. Any disclosure lying outside the scope of said claims is only intended for illustrative as well as comparative purposes.

Embodiments of the present disclosure may be directed to a method and an apparatus for preparing active material particles for dry electrodes.

These and other aspects and features of the present disclosure will be described in or will be apparent from the following description of embodiments of the present disclosure.

According to one or more embodiments of the present disclosure, a method for producing active material particles for a dry electrode, includes: forming a film by rolling first active material particles; forming a film powder by crushing the formed film; and obtaining second active material particles by sifting at least a portion of the film powder. An average particle diameter of the second active material particles is greater than an average particle diameter of the first active material particles.

In an embodiment, the forming of the film may include: preparing a mixture including the first active material particles and at least one of a conductive material or a binder; and rolling the mixture to form the film.

In an embodiment, the first active material particles may correspond to positive electrode active material particles or negative electrode active material particles.

In an embodiment, the first active material particles may include a lithium iron phosphate-based compound.

In an embodiment, the binder may include polytetrafluoroethylene (PTFE).

In an embodiment, the conductive material may include at least one of natural graphite, artificial graphite, or a silicon-based material.

In an embodiment, the average particle diameter of the first active material particles may be in a range from 0.1 µm to 3 µm.

In an embodiment, a grain size of each of the second active material particles may be larger than a grain size of each of the first active material particles.

In an embodiment, the average particle diameter of the second active material particles may be in a range from 4.5 µm to 30 µm.

In an embodiment, the method may further include forming a conductive material coating layer on a surface of each of the second active material particles by mixing the second active material particles with a conductive material.

In an embodiment, a thickness of the conductive material coating layer may be in a range from 1 nm to 500 nm.

According to one or more embodiments of the present disclosure, an apparatus for producing active material particles, includes: rollers configured to roll first active material particles to form a film; a crusher configured to crush the film to form a film powder; and a sieve configured to sift at least a portion of the film powder to obtain second active material particles. An average particle diameter of the second active material particles is greater than an average particle diameter of the first active material particles.

In an embodiment, the apparatus may further include a mixer configured to form a coating layer of the second active material particles using a conductive material.

In an embodiment, a dry electrode film including the active material particles produced by the method above may be provided.

In an embodiment, a specific surface area of the dry electrode film may be in a range from 0.1 m²/g to 6 m²/g measured by ISO 2808.

The dry electrode film produced based on the coated second active material particles having a relatively large particle size may include voids between the particles, making them relatively more flexible compared to a dry electrode film produced based on the first active material particles.

The granulation of the first active material particles may be facilitated by using at least one of the conductive materials or the binders. Furthermore, by adjusting the size of the through-holes of the sieve, the second active material particles may be obtained in a state in which an upper limit on the size of the particles is controlled. As such, the size of the active material particles may be adjusted.

According to some embodiments of the present disclosure, the conductive material coating layer may protect the second active material particle from collisions with other particles, thereby preventing or substantially preventing the deformation or damage of the second active material particle.

Due to the presence of the voids in the second film, a cohesion between the coated second active material particles may be lower than a cohesion between the first active material particles in the first film. Additionally, the second film may have a smaller specific surface area and a lower density compared to those of the first film, because the coated second active material particles may be loosely arranged in the second film. As a result, the second film may be relatively more flexible than the first film.

The dry electrode films may be produced more seamlessly using an active material size control process according to one or more embodiments of the present disclosure described herein.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a diagram illustrating an example of active material particles according to an embodiment of the present disclosure;
FIG. 2 is a diagram illustrating a method for producing second active material particles according to an embodiment of the present disclosure;
FIG. 3 is a diagram illustrating a method for obtaining a coated second active material particle according to an embodiment of the present disclosure;
FIG. 4 is a diagram illustrating an example of a rolling process including a first rolling process and a second rolling process according to an embodiment of the present disclosure;
FIG. 5 is a schematic diagram illustrating an example of a film according to an embodiment of the present disclosure;
FIG. 6 illustrates photos of an example of a film according to an embodiment of the present disclosure;
FIG. 7 is a graph illustrating characteristics of embodiments and comparative examples of films according to one or more embodiments of the present disclosure;
FIG. 8 is a diagram illustrating an example of a dry electrode film producing process according to an embodiment of the present disclosure; and
FIG. 9 is a flowchart illustrating an example of a method for producing active material particles according to an embodiment of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Throughout the specification, unless otherwise stated, each element may be singular or plural.

In addition, it will be understood that when a component is referred to as being "linked," "coupled," or "connected" to another component, the elements may be directly "coupled," "linked" or "connected" to each other, or another component may be "interposed" between the components".

Unless otherwise defined herein, a particle diameter denotes an average particle diameter. The particle diameter refers to an average particle diameter (D50), which is the diameter of the particle with a cumulative volume of 50 volume% in the particle size distribution. A laser diffraction method is employed for measurement. Specifically, in the laser diffraction method, the particles of interest are dispersed in a dispersion medium and introduced into a commercially available laser diffraction particle size analyzer (for example, Microtrac MT 3000). Ultrasonic waves at approximately 28 kHz with a power of 60 W are applied to the dispersion, and the average particle diameter (D50) based on 50% of the particle size distribution in the analyzer can be calculated.

As used herein, the terms "positive electrode active material," "positive electrode," "negative electrode active material," and "negative electrode" may be understood as follows.

### Positive Electrode Active Material

The positive electrode active material may include a compound (lithiated intercalation compound) that is capable of intercalating and deintercalating lithium. Specifically, at least one of a composite oxide of lithium and a metal selected from cobalt, manganese, nickel, and combinations thereof may be used.

The composite oxide may be a lithium transition metal composite oxide. Specific examples of the composite oxide may include lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be used. LiaA1-bXbO2-cDc (0.90≤a≤1.8, 0≤b≤0.5, and 0≤c≤0.05); LiaMn2-bXbO4-cDc (0.90≤a≤1.8, 0≤b≤0.5, and 0≤c≤0.05); LiaNi1-b-cCobXcO2-αDα (0.90≤a≤1.8, 0≤b≤0.5, 0≤c≤0.5, and 0<α<2); LiaNi1-b-cMnbXcO2-αDα (0.90≤a≤1.8, 0≤b≤0.5, 0≤c≤0.5, and 0<α<2); LiaNibCocL1dGeO2 (0.90≤a≤1.8, 0≤b≤0.9, 0≤c≤0.5, 0≤d≤0.5, and 0≤e≤0.1); LiaNiGbO2 (0.90≤a≤1.8 and 0.001≤b≤0.1); LiaCoGbO2 (0.90≤a≤1.8 and 0.001≤b≤0.1); LiaMn1-bGbO2 (0.90≤a≤1.8 and 0.001≤b≤0.1); LiaMn2GbO4 (0.90≤a≤1.8 and 0.001≤b≤0.1); LiaMn1-gGgPO4 (0.90≤a≤1.8 and 0≤g≤0.5); Li(3-f)Fe2(PO4)3 (0≤f≤2); or LiaFePO4 (0.90≤a≤1.8).

In the above Chemical Formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L1 is Mn, Al, or a combination thereof.

The positive electrode active material may be, for example, a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of realizing high capacity and can be applied to a high-capacity, high-density rechargeable lithium battery.

### Positive Electrode

A positive electrode for a rechargeable lithium battery may include a current collector and a positive electrode active material layer on the current collector. The positive electrode active material layer may include a positive electrode active material and may further include a binder and/or a conductive material (e.g., an electrically conductive material).

For example, the positive electrode may further include an additive that can serve as a sacrificial positive electrode.

An amount of the positive electrode active material may be about 90 wt% to about 99.5 wt% based on 100 wt% of the positive electrode active material layer. Amounts of the binder and the conductive material may be about 0.5 wt% to about 5 wt%, respectively, based on 100 wt% of the positive electrode active material layer.

The binder serves to attach the positive electrode active material particles well to each other and also to attach the positive electrode active material well to the current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may be used to impart conductivity (e.g., electrical conductivity) to the electrode. Any material that does not cause chemical change (e.g., does not cause an undesirable chemical change in the rechargeable lithium battery) and conducts electrons can be used in the battery. Examples of the conductive material may include a carbon-based material such as natural graphite, artificial graphite, carbon black, acetylene black, ketjen black, a carbon fiber, a carbon nanofiber, and carbon nanotube; a metal-based material containing copper, nickel, aluminum, silver, etc., in a form of a metal powder or a metal fiber; a conductive polymer such as a polyphenylene derivative; or a mixture thereof.

Al may be used as the current collector, but is not limited thereto.

### Negative Electrode Active Material

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example. crystalline carbon, amorphous carbon or a combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOx (0 < x < 2), a Si-Q alloy (where Q is selected from an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include Sn, SnO2, a Sn-based alloy, or a combination thereof.

The silicon-carbon composite may be a composite of silicon and amorphous carbon. According to an embodiment, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

### Negative Electrode

The negative electrode for a rechargeable lithium battery may include a current collector and a negative electrode active material layer on the current collector. The negative electrode active material layer may include a negative electrode active material, and may further include a binder and/or a conductive material (e.g., an electrically conductive material).

For example, the negative electrode active material layer may include about 90 wt% to about 99 wt% of the negative electrode active material, about 0.5 wt% to about 5 wt% of the binder, and about 0 wt% to about 5 wt% of the conductive material.

The binder may serve to attach the negative electrode active material particles well to each other and also to attach the negative electrode active material well to the current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material may be used to impart conductivity (e.g., electrical conductivity) to the electrode. Any material that does not cause chemical change(e.g., does not cause an undesirable chemical change in the rechargeable lithium battery) and that conducts electrons can be used in the battery. Non-limiting examples thereof may include a carbon-based material such as natural graphite, artificial graphite, carbon black, acetylene black, ketjen black, a carbon fiber, a carbon nanofiber, and a carbon nanotube; a metal-based material including copper, nickel, aluminum, silver, etc. in a form of a metal powder or a metal fiber; a conductive polymer such as a polyphenylene derivative; or a mixture thereof.

The negative current collector may include a copper foil, a nickel foil, a stainless steel foil, a titanium foil, a nickel foam, a copper foam, a polymer substrate coated with a conductive metal, or a combination thereof.

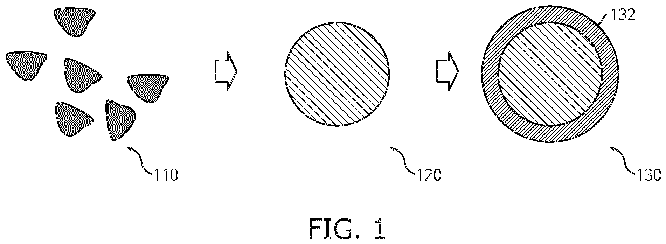

FIG. 1 is a diagram illustrating an example of active material particles according to an embodiment of the present disclosure.

A first active material particle 110 may be either a positive electrode active material or a negative electrode active material. In more detail, the first active material particle 110 may be a lithium transition metal composite oxide, with some examples including a lithium nickel-based oxide, a lithium cobalt-based oxide, a lithium manganese-based oxide, a lithium iron phosphate-based compound, a cobalt-free nickel-manganese-based oxide, or a suitable combination thereof. For example, the first active material particle 110 may be the lithium iron phosphate-based compound. However, the present disclosure is not limited thereto, and the first active material particle 110 may correspond to a particle of an active material having a particle size that may be desired to be increased.

The first active material particles 110 is roll-pressed by rollers to form a film. Further, the formed film is crushed using a crusher to produce a film powder. Subsequently, by sifting at least a portion of the film powder using a sieve, the second active material particles 120 is obtained.

An average particle diameter (D50) of the first active material particles 110 is smaller than that of the second active material particles 120. For example, the average particle diameter (D50) of the first active material particles 110 may be 3 µm or less. The average particle diameter (D50) of the second active material particles 120 may range from 4.5 µm to 30 µm, which is larger than the average particle diameter (D50) of the first active material particles 110.

In an embodiment, a grain size of the individual second active material particles 120 may be larger than that of the individual first active material particles 110. As used herein, a "grain" may refer to a solid having atoms that are regularly arranged to form a uniform or substantially uniform crystalline structure, and externally surrounded (e.g., around a periphery thereof) by geometric surfaces. During the process of forming the film through the roll-pressing of the first active material particles 110, the arrangement of atoms within the first active material particles 110 may change, resulting in an increase in the grain size of the individual second active material particles 120.

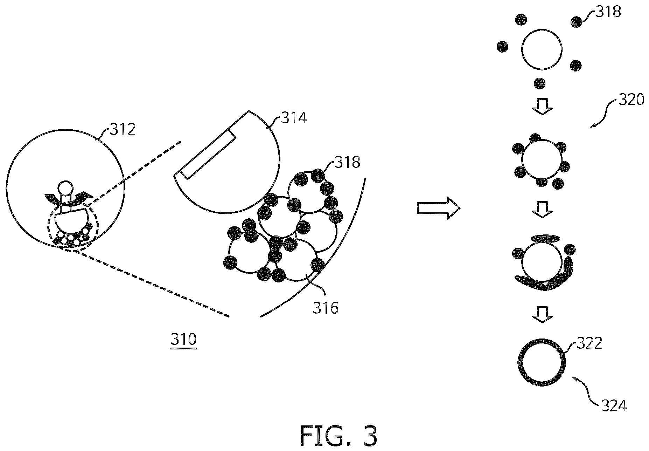

By mixing the second active material particles and conductive materials with each other using a mixer, coated second active material particles 130 including conductive material coating layers 132 formed on the surfaces of the second active material particles 120 may be obtained. The conductive material coating layers 132 may assist in maintaining or substantially maintaining the morphology of the second active material particles 120. The method of forming the conductive material coating layer 132 will be described in more detail below with reference to FIG. 3.

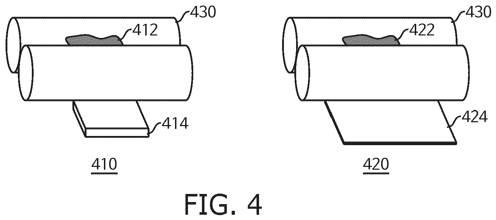

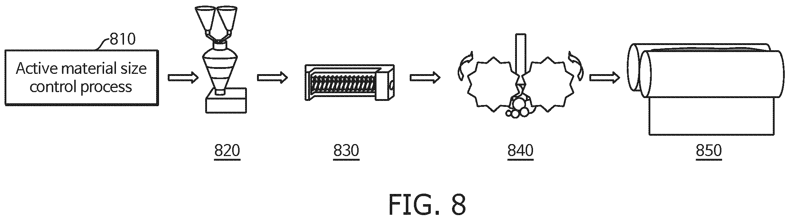

Based on the coated second active material particles 130, a dry electrode film may be produced. A dry electrode film that is produced based on the coated second active material particles 130 having a relatively large particle size may include (e.g., may contain) voids between the particles, making them relatively more flexible compared to a dry electrode film produced based on the first active material particles 110. The process of producing the dry electrode film will be described in more detail below with reference to FIG. 8, and further details regarding the dry electrode film that is prepared on the basis of the second active material particles 120 will be described in more detail below with reference to FIGS. 4 through 7.

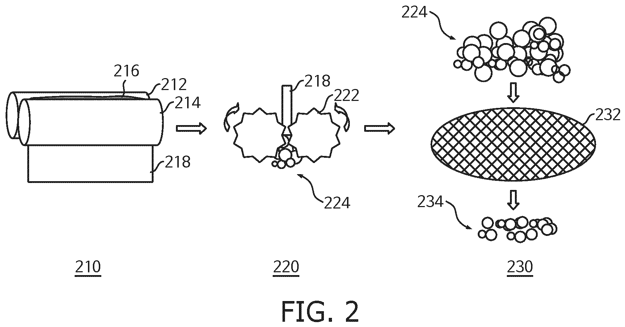

FIG. 2 is a diagram illustrating a method for producing second active material particles according to an embodiment of the present disclosure.

A rolling process 210 may represent a process of forming a film 218 based on a film powder 216 using a first roller 212 and a second roller 214. The film powder 216 may correspond to or include the first active material particles 110 described above with reference to FIG. 1.

In an embodiment, the film powder 216 may include at least one of a conductive material or a binder. The conductive material may include any of the conductive materials described above. For example, the conductive material may include a carbon-based material, such as natural graphite, artificial graphite, carbon black, acetylene black, ketjen black, a carbon fiber, a carbon nanofiber, and/or a carbon nanotube, or a silicon-based material. For example, the conductive material may be natural graphite, artificial graphite, or a silicon-based material.

Further, the binder may include any of the binder materials described above. The binder may include polytetrafluoroethylene (PTFE). However, the present disclosure is not limited thereto, and any suitable conductive material and/or binder for producing a dry electrode film as would be understood by those having ordinary skill in the art may be utilized.

In an embodiment, the conductive material may be the same as the conductive material used in the process of producing the dry electrode film that will be described in more detail below with reference to FIG. 8. Similarly, the binder may be the same as the binder used in the process of producing the dry electrode film that will be described in more detail below with reference to FIG. 8. Additionally, the film powder 216 may include at least some of the conductive materials and the binders used in the process of producing the dry electrode film. These will be described in more detail below with reference to FIG. 8.

The rolling process 210 may be performed using the first roller 212 and the second roller 214. In this case, the first roller 212 and the second roller 214 may have different rotational speeds (RPMs) from each other. For example, the ratio of rotational speeds of the first roller 212 and the second roller 214 may range from 1:1 to 1:20. Depending on the ratio of the rotational speeds of the rollers, the diameter of each roller may be adjusted to be different.

In an embodiment, a gap between the first roller 212 and the second roller 214 may be adjustable. In more detail, the gap between the first roller 212 and the second roller 214 may be adjusted to correspond to a thickness of the film 218. For example, the gap between the first roller 212 and the second roller 214 may be approximately 1 µm.

The rolling process 210 may be performed under various suitable conditions. For example, the film 218 may be formed at a rotational speed corresponding to about 5 rpm of the first roller 212 or the second roller 214. For example, the film 218 may be formed at a temperature ranging from 25°C to 200°C. In more detail, the film 218 may be formed at a temperature ranging from 25°C to 150°C. However, the present disclosure is not limited thereto, and the rolling process 210 may be performed under various suitable conditions that may be selected to form the film 218 based on the film powder 216.

A crushing process 220 may represent a process of crushing the film 218 that is produced through the rolling process 210 to form a film powder 224. In this case, the film 218 may be crushed using a crusher 222. In more detail, the crusher 222 may crush the film 218 through mechanical milling. For example, the crusher 222 may be any one of a cutting mill, a disk mill, a ball mill, a hammer mill, or a suitable combination of these devices.

The crushing process 220 may be performed under various suitable conditions. For example, the rotational speed of the crusher 222 may range from 500 rpm to 2500 rpm. For example, the film 218 may be crushed using the crusher 222 for about 30 seconds. However, the present disclosure is not limited thereto, and various suitable methods may be selected for crushing the film 218 to form the film powder 224.

A sifting process 230 may represent a process of sifting at least a portion of the film powder 224 to obtain second active material particles 234. In this case, a sieve 232 may be used to sift at least a portion of the film powder 224. The sieve 232 may include a plurality of through-holes. The through-holes may allow only the film powder having a desired size (e.g., a predetermined size) to pass through from the entire film powder 224. The second active material particles 234 may be obtained by sifting only the film powder having the desired size (e.g., the predetermined size) based on the size of the through-holes. The size (e.g., a particle diameter) of the second active material particles 234 may be adjusted based on the size of the through-holes. For example, if the size of the through-holes is about 30 µm, the size of the second active material particles 234 may be smaller than 30 µm.

The second active material particles 234 may be produced by granulating the first active material particles. For example, the first active material particles may be granulated by rolling the film powder 216 containing the first active material particles. In another example, the first active material particles may be granulated together with at least one of the conductive material or the binder by rolling the film powder 216 further containing at least one of the conductive material or the binder. Subsequently, the film 218 containing the granulated first active material particles may be crushed, and the crushed film powder 224 may be sifted to obtain the second active material particles 234 corresponding to the granulated first active material particles.

By granulating the smaller sized first active material particles, the relatively larger sized second active material particles 234 may be obtained. Further, the granulation of the first active material particles may be facilitated by using at least one of a conductive material or a binder. Furthermore, by adjusting the size of the through-holes of the sieve 232, the second active material particles 234 may be obtained in a state in which an upper limit on the size of the particles is controlled (e.g., is set). As such, the size of the active material particles may be adjusted.

FIG. 3 is a diagram illustrating a method for obtaining a coated second active material particle 324 according to an embodiment of the present disclosure.

A coating process 310 may represent a process of mixing second active material particles 316 with conductive materials to form conductive material coating layers on surfaces of the second active material particles 316.

In more detail, in the coating process 310, the second active material particles 316 and the conductive materials 318 may be mixed with each other in a mixer 312 to form the conductive material coating layers. In this case, the mixer 312 may include a compression member 314. The compression member 314 may apply a shear force or a compression force to the conductive materials 318 and the second active material particles 316. Referring to the right side of FIG. 3, the shear force or the compression force may cause the conductive materials 318 to adhere to the surface of the second active material particle 316. As the shear force or the compression force is continuously applied, the conductive materials 318 may be evenly or substantially evenly applied over the entire or substantially entire surface of the second active material particle 316. As a result, a conductive material coating layer 322 may be formed on the surface of the second active material particle 316, thereby modifying the surface of the second active material particle 316.

In an embodiment, the conductive material coating layer 322 may have a suitable thickness (e.g., a certain or predetermined thickness) capable of supporting the second active material particle 316. For example, the conductive material coating layer 322 may have a thickness ranging from 1 nm to 500 nm. However, the present disclosure is not limited thereto, and the conductive material coating layer 322 may have a suitable thickness (e.g., a certain or predetermined thickness) to maintain or substantially maintain the morphology of the second active material particle 316, and not impede the movement of the lithium ions.

In an embodiment, the conductive material may be the same as the conductive material used in the process of producing the dry electrode film to be described in more detail below with reference to FIG. 8. Additionally or as another example, the conductive material may be the same as the conductive material contained in the film powder 216 described above with reference to FIG. 2. For example, the conductive material may be at least one of natural graphite, artificial graphite, or a silicon-based material.

The mixer 312 may be a device capable of mixing the second active material particles 316 and the conductive materials 318. For example, the mixer may be a mechanofusion mixer, a planetary mixer, an extruder, or the like. However, the present disclosure is not limited thereto, and any suitable device capable of mixing the second active material particles 316 and the conductive materials 318 with each other while applying the shear force or the compression force may be utilized as the mixer 312.

In an embodiment, the mixer 312 containing the second active material particles 316 and the conductive materials 318 may be rotated under various suitable conditions to form a coating layer. For example, the mixer 312 may be rotated at a rotational speed ranging from 3000 rpm to 15000 rpm to mix the second active material particles 316 and the conductive materials 318 with each other. For example, the second active material particles 316 and the conductive materials 318 may be mixed with each other at a temperature ranging from 25°C to 150°C. For example, the mixer 312 may be rotated at a rotational speed of about 5000 rpm for approximately 2 minutes to mix the second active material particles 316 and the conductive materials 318 with each other. However, the present disclosure is not limited thereto, and various suitable conditions may be selected to sufficiently form the conductive material coating layer 322 on the surface of the second active material particle 316.

By forming the conductive material coating layer 322 on the surface of the second active material particle 316, the morphology of the second active material particles 316 may be more stabilized. For example, when the second active material particles 316 are used in the process of producing the dry electrode film, each second active material particle 316 may collide with other particles, and the morphology of the second active material particle 316 may not be maintained. However, in some embodiments, the conductive material coating layer 322 may protect the second active material particle 316 from collisions with other particles, thereby preventing or substantially preventing the deformation or damage of the second active material particle 316.

FIG. 4 is a diagram illustrating an example of a rolling process including a first rolling process 410 and a second rolling process 420 according to an embodiment of the present disclosure.

The first rolling process 410 may form a first film 414 by rolling a first film powder 412. The first film powder 412 may include first active material particles (e.g., the first active material particles 110 of FIG. 1). The second rolling process 420 may form a second film 424 by rolling a second film powder 422. The second film powder 422 may include coated second active material particles (e.g., the coated second active material particles 130 of FIG. 1).

In the first rolling process 410 and the second rolling process 420, the first film 414 and the second film 424 may be formed in the form of free-standing films. The free-standing film will be described in more detail below with reference to FIG. 8. Furthermore, the first rolling process 410 and the second rolling process 420 may differ from the rolling process 210 described above with reference to FIG. 2. In other words, the first rolling process 410 and the second rolling process 420 may be provided not for obtaining the second active material particles, but for forming the first film 414 and the second film 424 to assess the characteristics of the first film 414 and the second film 424.

In an embodiment, each of the first and second film powders 412 and 422 may additionally include (e.g., additionally contain) at least one of a conductive material or a binder. At least one of the conductive material or the binder may assist in forming the first and second films 414 and 424. For example, at least one of the conductive material or the binder may help the particles contained in the first and second film powders 412 and 422 to agglomerate.

Rollers 430 may be used in the first rolling process 410 and the second rolling process 420. The conditions and the environment under which the rollers 430 are used in the first rolling process 410 and the second rolling process 420 may be the same as each other. For example, a gap between the rollers 430, a rotational speed ratio of the rollers 430, a temperature, and the like may be the same in the first rolling process 410 and the second rolling process 420.

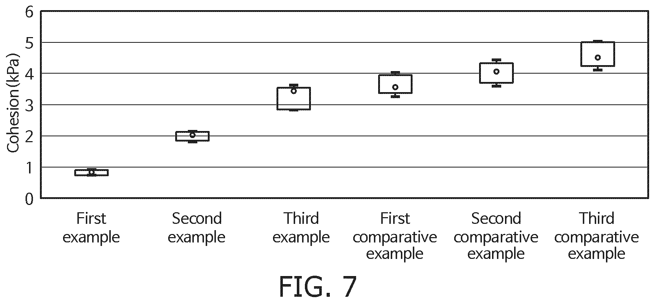

For example, the first active material particles included in the first film 414 may be smaller in size, and thus, may have high cohesion between the particles. Further, the first active material particles in the first film 414 may be densely packed. As a result, in the first film 414, the density may be relatively high, the particle size may be relatively small, and the specific surface area may be relatively large. On the other hand, the second active material particles included in the second film 424 may be larger in size, and thus, may have low cohesion between the particles. Further, the second active material particles in the second film 424 may be loosely arranged. As a result, in the second film 424, the density may be relatively low, the particle size may be relatively large, and the specific surface area may be relatively small. More details regarding the characteristics of the first film 414 and the second film 424 will be described below with reference to FIG. 7.

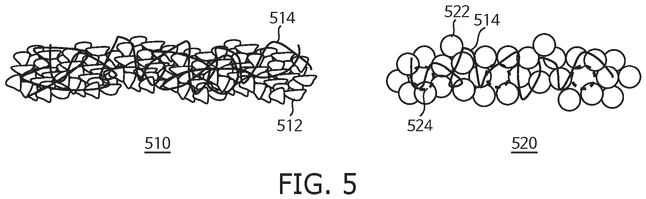

FIG. 5 is a schematic diagram illustrating an example of a film according to an embodiment of the present disclosure.

A first schematic diagram 510 may illustrate the arrangement of particles contained within a first film (e.g., the first film 414 of FIG. 4). The second schematic diagram 520 may illustrate the arrangement of particles contained within a second film (e.g., the second film 424 of FIG. 4).

In an embodiment, the first film may include first active material particles 512 and a binder 514. The second film may include coated second active material particles 522 and the binder 514. The binder 514 included in the first film and the binder 514 included in the second film may correspond to the same material.

The binder 514 in the first film may be fibrillated into fine fiber strands when rolled together with the first active material particles 512. Similarly, the binder 514 in the second film may be fibrillated into fine fiber strands when rolled together with the coated second active material particles 522. The binder 514 in the form of fine fiber strands may support the first active material particles 512 (or the coated second active material particles 522) to maintain or substantially maintain the film shape in the first film (or the second film).

Referring to the first schematic diagram 510 of FIG. 5, the first active material particles in the first film may be densely packed. Further, there may be few voids (e.g., corresponding to empty spaces) between the first active material particles in the first film. Even if voids are present, the size of the void may correspond to the size of the first active material particle. Referring to the second schematic diagram 520 of FIG. 5, the coated second active material particles in the second film may be loosely arranged. Further, there may be many voids 524 between the coated second active material particles in the second film. For example, the size of the void may correspond to the size of the coated second active material particle.

Due to the presence of the voids 524 in the second film, the cohesion between the coated second active material particles in the second film may be lower than the cohesion between the first active material particles in the first film. Additionally, the second film may have the smaller specific surface area and the lower density compared to those of the first film, because the coated second active material particles may be more loosely arranged in the second film. As a result, the second film may be relatively more flexible than the first film.

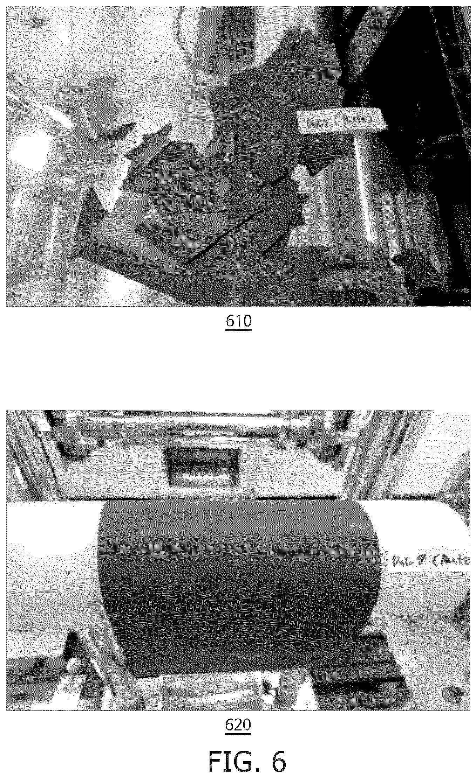

FIG. 6 illustrates photos of an example of a film according to an embodiment of the present disclosure.

A first image 610 shows an appearance of a first film, and a second image 620 shows an appearance of a second film. The first film may be formed based on a first film powder including (e.g., containing) the first active material particles, and the second film may be formed based on a second film powder including (e.g., containing) the second active material particles or the coated second active material particles. For example, the first film may correspond to the first film 410 described above with reference to FIG. 4, and the second film may correspond to the second film 420 described above with reference to FIG. 4.

In an embodiment, the first film powder may include a first mixture including (e.g., containing) the first active material particles and at least one of a conductive material (or conductive materials) or a binder (or binders), which may be obtained through a mixing process (e.g., a mixing process 820 to be described in more detail below with reference to FIG. 8). Similarly, the second film powder may include a second mixture including (e.g., containing) the coated second active material particles and at least one of a conductive material (or conductive materials) or a binder (or binders), which may be obtained through the mixing process. In another embodiment, the first film powder may include a first film powder formed by subjecting the first mixture to a fibrillation process (e.g., a fibrillation process 830 to be described in more detail below with reference to FIG. 8), and a crushing process (e.g., a crushing process 840 to be described in more detail below with reference to FIG. 8). Similarly, the second film powder may include a second film powder formed by subjecting the second mixture to the fibrillation process and the crushing process.

After the film is formed, the film may be wound onto a roll. In this case, the film may have a level (e.g., a certain or predetermined level) of flexibility to be wound onto the roll effectively. Referring to the first image 610 and the second image 620 shown in FIG. 6, the first film may have a relatively larger specific surface area and a relatively smaller particle size, which may result in a reduced flexibility. On the other hand, the second film may have a relatively smaller specific surface area and a relatively larger particle size, which may allow for greater flexibility. In this case, the first film may lack the desired flexibility to be wound onto the roll, and may be damaged. On the other hand, the second film, having the greater flexibility, may be successfully wound onto the roll. Consequently, while the first film may not be suitable for use as an electrode film, the second film may serve as an effective electrode film.

The electrode film may be utilized in a roll-to-roll continuous process. Maintaining or substantially maintaining the film form may be desired for the roll-to-roll continuous process. As described above, by utilizing the second film, an electrode film manufacturing process may be facilitated by maintaining or substantially maintaining the film form.

More specifically, the film illustrated in FIG. 6 is formed by the following process:
Step a) Mixing: First active material particle (LiFePO₄) + conductive material + binder are mixed in a blade mill at 2000rpm / 10min;
Step b) Film forming: The mixture of step a) is rolled into a first film between two rollers at a velocity ratio of the rolls of 1:1 and a temperature of 100°C;
Step c) Crushing: The first film is crushed in a blade mill at 1000rpm / 30s to obtain a film powder;
Step d) Sifting: A portion of the film powder of step c) is shifted through a sieve to obtain second active material particles 30µm or smaller;
Step e) Conductive particle coating: The second active material particle are coated with a conductive material by mechanofusion at 5000rpm / 2min;
Step f) Mixing: The coated second active material particles are mixed with a binder (3.2 parts) in a blade mill at 2000rpm / 30s; and
Step g) Film forming: The mixture of step f) is rolled into a second film between two rollers at a velocity ratio of the rolls of 1:3 and a temperature of 100°C.

FIG. 7 is a graph illustrating characteristics of embodiments and comparative examples of films according to one or more embodiments of the present disclosure. A first example may be a film formed by rolling a film powder including (e.g., containing) the coated second active material particles. A second example may be a film formed by rolling a film powder including (e.g., containing) the coated second active material particles and the conductive materials. A third example may be a film formed by rolling a film powder including (e.g., containing) the coated second active material particles, the conductive materials, and the binders. The cohesion is measured using a powder flow analyser (e.g., 302e apparatus manufactured by Anton Paar GmbH).

A first comparative example may be a film formed by rolling a film powder including (e.g., containing) the first active material particles. A second comparative example may be a film formed by rolling a film powder including (e.g., containing) the first active material particles and the conductive materials. A third comparative example may be a film formed by rolling a film powder including (e.g., containing) the first active material particles, the conductive materials, and the binders.

The graph in FIG. 7 shows an average cohesion between the particles according to each of the examples or embodiments and the comparative examples. In FIG. 7, the average cohesion between the particles may be indicated by a point on a bar graph for each example. Referring to FIG. 7, the average cohesion between the particles in the first example may be about 1 kPa, the average cohesion between the particles in the second example may be about 2 kPa, and the average cohesion between the particles in the third example may be about 3.5 kPa. Further, the average cohesion between the particles in the comparative example may be about 3.6 kPa, the average cohesion between the particles in the second comparative example may be about 4 kPa, and first the average cohesion between the particles in the third comparative example may be about 4.4 kPa. Therefore, the average cohesion between the particles of the film produced on the basis of the coated second active material particles may be relatively lower.

In more detail, the coated second active material particles included in the second example may have the average particle diameter (D50) of about 4.3 µm. Further, the specific surface area in the second example may be about 5.7 m²/g. In comparison, the coated second active material particles in the second comparative example may have the average particle diameter (D50) of 1 µm. The specific surface area in the second comparative example may be 10.9 m²/g. In other words, the average particle diameter (D50) of the particles contained in the film with the lower average cohesion between particles may be relatively larger, while the specific surface area thereof may be relatively smaller.

By examining the characteristics of the film as shown in FIG. 7, it can be observed that maintaining the form of the film is facilitated when the average cohesion between the particles in the film is 3 kPa or less. It can also be confirmed that maintaining the form of the film is facilitated when the specific surface area of the film is about 6 m²/g or less. Furthermore, it can be confirmed that maintaining the form of the film is facilitated when the average particle diameter of the active material particles contained in the film is about 4.5 µm or more.

FIG. 8 is a diagram illustrating an example of a dry electrode film producing process according to an embodiment of the present disclosure.

The dry electrode film producing process may be performed after an active material size control process 810 according to an embodiment of the present disclosure. In other words, in the dry electrode film fabrication process, the coated second active material particles obtained through the active material size control process may be used as the active materials in the subsequent processes 820 to 850. The active material size control process 810 may include a method of producing the active material particles according to an embodiment of the present disclosure. For example, the active material size control process 810 may include the rolling process 210, the crushing process 220, and the sifting process 230 described above with reference to FIG. 2, and the coating process 310 described above with reference to FIG. 3.

The dry electrode film producing process may include a mixing process 820, a fibrillation process 830, a crushing process 840, and a rolling process 850. Through the mixing process 820, a mixture may be produced by mixing the active materials, the binders, and the conductive materials. In this case, the active materials may include (e.g., may consist of) the coated second active material particles obtained through the active material size control process 810.

The mixture may be formed into a mixture powder through the fibrillation process 830. In more detail, in the fibrillation process 830, a shear force may be applied to the binders included in the mixture, allowing the binders to be fibrillated. The fibrous binders may help bind or connect the active materials and the conductive materials included in the mixture with each other. For example, a kneader may be used to form the mixture powder.

The mixture powder may be formed into a crushed mixture powder through the crushing process 840. For example, the crushing process 840 may be performed using the crusher. By forming the crushed mixture powder, the film formation of the mixture powder may be facilitated.

The crushed mixture powder may be used to form a dry electrode film through the rolling process 850. In more detail, the fibrous binders may facilitate the binding or the connection of the active materials and the conductive materials with each other to support or maintain the form of the film, thereby forming the dry electrode film. Additionally, the dry electrode film may be formed without the use of separate solvents.

The dry electrode film may be formed in the form of a free-standing film. The free-standing film may refer to a film that may be formed independently without being laminated to a current collector. In other words, the dry electrode film may be formed in the form of the free-standing film, and may then be laminated to a current collector.

In an embodiment, the conductive materials may be the same as the conductive materials used in the rolling process 210 described above with reference to FIG. 2. Similarly, the binders may be the same as the binders used in the rolling process 210 described above with reference to FIG. 2. For example, assuming that the total amount of the binders and the total amount of the conductive materials to be used in the manufacturing of the dry electrode are respectively 100% and 100% (e.g., % may refer to a mass ratio), the coated second active material particles may be obtained through the active material size control process 810 based on a film powder including (e.g., containing) about 20% of the conductive materials and about 20% of the binders. Thereafter, a free-standing film may be produced through a dry electrode producing process based on a mixture including (e.g., containing) the coated second active material particles along with the remaining about 80% of the conductive materials and the remaining about 80% of the binders. In another example, the coated second active material particles may be obtained through the active material size control process 810 based on a film powder including (e.g., containing) about 50% of the conductive materials and about 100% of the binders. Thereafter, a free-standing film may be produced through the dry electrode producing process based on a mixture including (e.g., containing) the coated second active material particles along with the remaining about 50% of the conductive materials. In another example, coated second active material particles may be obtained through the active material size control process 810 based on a film powder including (e.g., containing) about 50% of the conductive materials and about 50% of the binders. Thereafter, a free-standing film may be produced through the dry electrode producing process based on a mixture including (e.g., containing) the coated second active material particles along with the remaining about 50% of the conductive materials and the remaining about 50% of the binders. As such, the conductive materials and the binders may be divided into suitable proportions (e.g., certain or predetermined proportions), and utilized in each of the active material size control process 810 and the dry electrode film producing process. However, the proportions of the conductive materials and the binders are not limited thereto, and the proportions of the conductive materials and the binders may be variously adjusted appropriately to obtain the coated second active material particles that are suitable for the production of the dry electrode film according to one or more embodiments of the present disclosure.

As described above, a dry electrode film, which is produced through a dry electrode film producing process using active material particles without undergoing the active material size control process 810, may not maintain the form of the film. On the other hand, a dry electrode film, which is produced through the dry electrode film producing process using the active material particles subjected to the active material size control process 810 according to one or more embodiments of the present disclosure, may properly maintain the form of the film. In other words, a dry electrode film may be produced more smoothly using the active material size control process 810 according to one or more embodiments of the present disclosure.

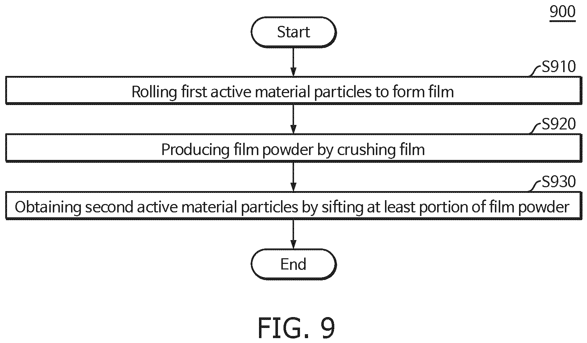

FIG. 9 is a flowchart illustrating an example of a method 900 for producing active material particles according to an embodiment of the present disclosure.

In an embodiment, the method 900 may be performed by an apparatus for producing the active material particles. The apparatus may include rollers (e.g., the rollers shown in FIG. 2), a crusher (e.g., the crusher shown in FIG. 2), a sieve (e.g., the sieve shown in FIG. 2), and a mixer (e.g., the mixer shown in FIG. 3). Further, a dry electrode film including (e.g., containing) the active material particles prepared by the method 900 may be provided. The specific surface area (e.g., the specific predetermined surface area) of the dry electrode film may be in a range from 0.1 m²/g to 6 m²/g.

The method 900 may start, and first active material particles may be rolled by the rollers to form a film (S910). The first active material particles may correspond to the positive electrode active material particles or the negative electrode active material particles. For example, the first active material particles may correspond to lithium iron phosphate-based compounds. In an embodiment, an average particle diameter (D50) of the first active material particles may range from 0.1 µm to 3 µm.

In an embodiment, the rollers may include a first roller and a second roller. The film may be formed by rolling the first active material particles using the first roller and the second roller. In this case, the ratio of the rotational speeds between the first roller and the second roller may range from 1:1 to 1:20. Further, the film may be formed by rolling the first active material particles at a temperature ranging from 25°C to 200°C.

The formed film may be crushed using the crusher to produce a film powder (S920). For example, a mixture including (e.g., containing) at least one of a conductive material (or conductive materials) or a binder (or binders) along with the first active material particles may be prepared. The mixture may be rolled to form the film. For example, the binders may correspond to polytetrafluoroethylene (PTFE). For example, the conductive materials may include at least one of natural graphite, artificial graphite, or a silicon-based material.

In an embodiment, the film powder may be formed using the crusher, such as a cutting mill, a disk mill, a ball mill, or a hammer mill.

Second active material particles may be obtained by sifting at least a portion of the film powder using the sieve (S930), and the method 900 may end. An average particle diameter (D50) of the second active material particles may be larger than the average particle diameter (D50) of the first active material particles. Further, a grain size of the individual second active material particles may be larger than a grain size of the individual first active material particles. For example, the average particle diameter (D50) of the second active material particles may range from 4.5 µm to 30 µm.

In an embodiment, a conductive material coating layer may be formed on a surface of each of the second active material particles by mixing the second active material particles and the conductive materials with each other using the mixer. In more detail, the conductive material coating layer may be formed at a temperature ranging from 25°C to 150°C. For example, a thickness of the conductive material coating layer may range from 1 nm to 500 nm.

## Claims

1. A method for producing active material particles for a dry electrode, comprising:
forming a film (218) by rolling first active material particles (110);
forming a film powder (224) by crushing the formed film (218); and
obtaining second active material particles (234) by sifting at least a portion of the film powder (224),
wherein an average particle diameter (D50) of the second active material particles (120) is greater than an average particle diameter (D50) of the first active material particles (110), wherein the particle diameters are measured by a laser diffraction method.

2. The method as claimed in claim 1, wherein the forming of the film (218) comprises:
preparing a mixture comprising the first active material particles (110) and at least one of a conductive material or a binder; and
rolling the mixture to form the film (218).

3. The method as claimed in claim 1 or 2, wherein the first active material particles (110) correspond to positive electrode active material particles or negative electrode active material particles.

4. The method as claimed in any one of the preceding claims, wherein the first active material particles (110) comprise a lithium iron phosphate-based compound.

5. The method as claimed in claim 2, wherein the binder comprises polytetrafluoroethylene (PTFE).

6. The method as claimed in claim 2 or claim 5, wherein the conductive material comprises at least one of natural graphite, artificial graphite, or a silicon-based material.

7. The method as claimed in any one of the preceding claims, wherein the average particle diameter of the first active material particles (110) is in a range from 0.1 µm to 3 µm measured by a laser diffraction method.

8. The method as claimed in any one of the preceding claims, wherein a grain size of each of the second active material particles (120) is larger than a grain size of each of the first active material particles (110).

9. The method as claimed in any one of the preceding claims, wherein the average particle diameter (D50) of the second active material particles (120) is in a range from 4.5 µm to 30 µm measured by a laser diffraction method.

10. The method as claimed in any one of the preceding claims, further comprising:
forming a conductive material coating layer (322) on a surface of each of the second active material particles (316) by mixing the second active material particles (316) with a conductive material (318).

11. The method as claimed in claim 10, wherein a thickness of the conductive material coating layer (322) is in a range from 1 nm to 500 nm.

12. An apparatus for producing active material particles, comprising:
rollers (212, 214) configured to roll first active material particles (110) to form a film (218);
a crusher (222) configured to crush the film (218) to form a film powder (224); and
a sieve (232) configured to sift at least a portion of the film powder (224) to obtain second active material particles (234),
wherein an average particle diameter (D50) of the second active material particles (234) is greater than an average particle diameter (D50) of the first active material particles (110), wherein the particle diameters are measured by a laser diffraction method.

13. The apparatus as claimed in claim 17, further comprising:
a mixer (312) configured to form a coating layer (322) of the second active material particles (234) using a conductive material.

14. A dry electrode film comprising the active material particles produced by the method as claimed in claim 1.

15. The dry electrode film as claimed in claim 14, wherein a specific surface area of the dry electrode film is in a range from 0.1 m²/g to 6 m²/g measured by ISO 2808.
